# EUROPÄISCHE PATENTSCHRIFT

(11) **EP 3 665 736 B1**
(45) Veröffentlichungstag und Bekanntmachung des Hinweises auf die Patenterteilung: **23.09.2020**
(21) Anmeldenummer: 19701304.8
(22) Anmeldetag: 11.01.2019
(51) Int. Cl.: H01M 8/04089, H01M 8/04111

(54) **BRENNSTOFFZELLENSYSTEM MIT EINER DEM VERDICHTER ZUGEORDNETEN MITTELDRUCKENTNAHME SOWIE VERWENDUNG EINES DERARTIGEN BRENNSTOFFZELLENSYSTEMS**
FUEL CELL SYSTEM WITH EXTRACTION OF MEDIUM PRESSURE FROM COMPRESSOR AND USE OF SAID FUEL CELL SYSTEM
SYSTÈME DE PILE À COMBUSTIBLE AVEC EXTRACTION EN PRESSION INTERMEDIAIRE D'UN COMPRESSEUR ET UTILISATION DUDIT SYSTÈME

(30) Priorität: 17.01.2018 DE 102018200681
(43) Veröffentlichungstag der Anmeldung: 17.06.2020
(73) Patentinhaber: Audi AG, 85045 Ingolstadt (DE); Volkswagen AG, 38440 Wolfsburg (DE)
(72) Erfinder: JENSSEN, Dirk, 38114 Braunschweig (DE); LUCAS, Christian, 38108 Braunschweig (DE)
(86) Internationale Anmeldenummer: PCT/EP2019/050670
(87) Internationale Veröffentlichungsnummer: WO 2019/141602

(56) Entgegenhaltungen:
- WO-A1-2017/069122
- DE-A1-102010 023 671

## Beschreibung

Die Erfindung betrifft ein Brennstoffzellensystem mit mindestens einer in einem Gehäuse angeordneter Membran-Elektroden-Einheit, mit einer einen Verdichter aufweisenden Kathodenversorgung und mit einer Vorrichtung zur Gehäusebelüftung. Die Erfindung betrifft weiterhin die Verwendung des erfindungsgemäßen Brennstoffzellensystems zur Kathodenrezirkulation.

Ein Brennstoffzellensystem dient zur Erzeugung elektrischer Energie durch die Reaktion eines Brennstoffes, insbesondere Wasserstoff, mit Sauerstoff unter Nutzung der Membran-Elektroden-Einheit, die eine protonleitende Membran aufweist, auf der einerseits eine Anodenelektrode und andererseits eine Kathodenelektrode angeordnet ist. Zur Erhöhung der bereitgestellten elektrischen Energie werden in der Regel mehrere Membran-Elektroden-Einheiten zu einem Stapel zusammengefasst, der in dem Gehäuse angeordnet ist. Beim Betrieb des Brennstoffzellensystems ist darauf zu achten, dass eine für die bereitgestellte Menge des Wasserstoffs ausreichende Menge von Sauerstoff in das Gehäuse eingeleitet wird. Um dies sicherzustellen, ist der Verdichter vorgesehen.

Zu beachten ist weiterhin, dass Wasserstoff aus der Membran-Elektroden-Einheit in das Gehäuse diffundiert, so dass zur Vermeidung eines brennbaren Gemisches innerhalb des Gehäuses die Vorrichtung zur Gehäusebelüftung erforderlich ist.

In der DE 10 2015 220 641 A1 ist diesbezüglich als zu dem Stand der Technik gehörend offenbart, dass als zusätzliches Bauteil ein eigenständiges Gebläse eingesetzt wird, um eine ausreichende Belüftung des Gehäuses zu gewährleisten. Dieses Gebläse stellt eine zusätzliche Komponente dar, die den Raumbedarf und den erforderlichen Energiebedarf zum Betrieb des Brennstoffzellensystems erhöht.

In der DE 10 2013 003 470 A1 ist ein Brennstoffzellensystem gezeigt, bei dem das Gehäuse wenigstens eine Belüftungsverbindung zur Umgebung aufweist und während des Betriebs des Verdichters als Luftfördereinrichtung eine eigenständige Beströmung des Gehäuses erzeugt wird.

In der DE 10 31 238 A1 wird bei einem Brennstoffzellensystem das Gehäuse durch explosionsgeschützte Lüfter belüftet.

Aufgabe der vorliegenden Erfindung ist es, ein Brennstoffzellensystem der eingangs genannten Art so auszubilden, dass der Aufbau vereinfacht und der Energiebedarf reduziert ist. Aufgabe ist es weiterhin, ein einfaches Verfahren zur Kathodenrezirkulation anzugeben.

Der die Vorrichtung betreffende Teil der Aufgabe wird durch ein Brennstoffzellensystem mit mindestens einer in einem Gehäuse angeordneten Membran-Elektrodeneinheit, mit einer einen Verdichter aufweisenden Kathodenversorgung und mit einer Vorrichtung zur Gehäusebelüftung gelöst, wobei die Vorrichtung zur Gehäusebelüftung eine dem Verdichter zugeordnete Mitteldruckentnahme aufweist.

Ein derartiges Brennstoffzellensystem zeichnet sich dadurch aus, dass vollständig auf ein Gebläse zur Gehäusebelüftung verzichtet werden kann, also diese Komponente entfällt und auch der zum Betrieb dieser Komponente erforderliche Energieeinsatz. Weiterhin wird ausgenutzt, dass durch den Verdichter bereits ein Luftstrom bereitgestellt ist. Für die Verdichtung des Luftstromes und dessen dabei auftretende Erwärmung wird Energie benötigt. Durch die Erfindung wird der Energieeinsatz weiter optimiert, nicht lediglich durch den Verzicht auf das Gebläse, sondern auch durch die Erkenntnis, dass zum Zwecke der Belüftung nicht die vollständig komprimierte Luft erforderlich ist, sondern auch mit geringerem Druck eine ausreichend große Menge an Luft zur Gehäusebelüftung bereit gestellt ist und erfindungsgemäß zur Gehäusebelüftung die dem Verdichter zugeordnete Mitteldruckentnahme genutzt werden kann. Die energiebedürftige Erzeugung hohen Druckes allein zum Zwecke der Gehäusebelüftung wird vermieden.

Im Rahmen der Erfindung ist es bevorzugt, wenn der Verdichter im Bereich eines im Betrieb intern vorliegenden Mitteldrucks eine Austrittsöffnung aufweist, die über eine Druckleitung mit einer Gehäuseöffnung des Gehäuses verbunden ist. Die Mitteldruckentnehme lässt sich damit in besonders einfacher Weise realisieren durch Ausbildung einer Austrittsöffnung im Verdichter, die mit der sonst für das Gebläse verwendeten Druckleitung verbunden werden kann.

Als günstig hat es sich weiterhin gezeigt, wenn der Austrittsöffnung und/oder der Druckleitung und/oder der Gehäuseöffnung ein Ventil zugeordnet ist. Dabei kann das Ventil als passives Ventil ausgelegt sein, das bei Überschreiten eines Mindestdrucks sich selbststätig öffnet. Damit ist sichergestellt, dass der Betriebszustand der Gehäusebelüftung nur dann vorliegt, wenn auch eine ausreichende Luftmenge zur Verfügung steht, also jede Luftströmung in der Druckleitung zu einer sicheren Gehäusebelüftung führt, was gegebenenfalls die Überwachung und Regelung vereinfacht. Vorteilhaft ist es weiterhin, wenn der Mitteldruckentnahme ein aktives Drosselorgan zugeordnet ist, mit dem wiederum die entnommene Luftmenge, beispielsweise in Abhängigkeit der Messwerte eines im Gehäuse angeordneten Wasserstoffsensors, geregelt werden kann.

Im Rahmen der Erfindung ist weiterhin vorgesehen, dass der Verdichter ausgewählt ist aus einer Gruppe, die Schraubenverdichter und Rootsverdichter umfasst. Bei einem Schraubenverdichter beispielsweise nimmt der Druck in Schraubenlängsrichtung kontinuierlich zu, so dass die Mitteldruckentnahme einfach durch die Anordnung der Austrittsöffnung in der Mitte des Verdichters, also mit ausreichendem Abstand zu dessen Enden erfolgt.

Um zu vermeiden, dass durch die Vorrichtung zur Gehäusebelüftung innerhalb des Gehäuses ein erhöhter Druck aufgebaut wird, der dem Zustrom weiterer Luft entgegenwirkt, weist das Gehäuse eine Austrittsöffnung der Gehäusebelüftung auf. Diese Austrittsöffnung kann am einfachsten ins Freie in die Außenumgebung führen. Bevorzugt ist es allerdings, wenn von der Austrittsöffnung eine Entlüftungsleitung zu einem Turbinenaustritt stromab einer Turbine geführt ist, um so die durch den Verdichter bereitgestellte komprimierte Luft weiterverwenden zu können. Zweckmäßig ist es dann, wenn ein erstes Absperrventil vor dem Verdichter und ein zweites Absperrventil nach dem Anschluss der Entlüftungsleitung an dem Turbinenaustritt angeordnet sind.

Mit einem derartigen konstruktiven Aufbau ist die Lösung der das Verfahren betreffenden Teilaufgabe möglich, nämlich die Verwendung des Brennstoffzellensystems zur Realisierung einer Kathodenrezirkulation, umfassend die Schritte:
- Schließen des ersten Absperrventils, Schließen des zweiten Absperrventils, Ansaugen von Gas aus dem Gehäuse mittels des Verdichters durch die Mitteldruckentnahme, Verdichten des Gases nach der Mitteldruckentnahme bis zum Verdichteraustritt, und Strömen des Gases durch das Gehäuse zu der Turbine und über die Entlüftungsleitung durch das Gehäuse zum Verdichter zurück.

Mit dem erfindungsgemäßen Brennstoffzellensystem lässt sich damit ein weiterer Nachteil beim Betrieb einer Brennstoffzelle mildern oder sogar beseitigen, nämlich eine Schädigung der Brennstoffzelle, wenn sich bei einem Start anodenseitig wie kathodenseitig der Membran-Elektroden-Einheit Sauerstoff befindet, was zu den Problemen eines Luft-Luft-Starts führt, die immer dann vorliegen, wenn nach dem Abschalten des Brennstoffzellensystem ein Sauerstoffeintrag stattfindet. Die Kathodenrezirkulation dient dabei dem Ziel, durch Umwälzung des durch das erste Absperrventil und das zweite Absperrventil geschlossenen Systems den restlichen Sauerstoff abzureagieren.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische, vereinfachte Darstellung eines Brennstoffzellensystems mit einem zur Mitteldruckentnahme modifizierten Verdichter,
- Fig. 2: eine der Figur 1 entsprechende Darstellung mit einer der Austrittsöffnung des Gehäuses zugeordneten Entlüftungsleitung,
- Fig. 3: eine der Figur 1 entsprechende Darstellung einer nochmals modifizierten Ausführungsform mit der Eignung zur Verwendung zur Kathodenrezirkulation, und
- Fig. 4: eine schematische Darstellung eines als Schraubenverdichter ausgeführten Verdichters mit der Mitteldruckentnahme.

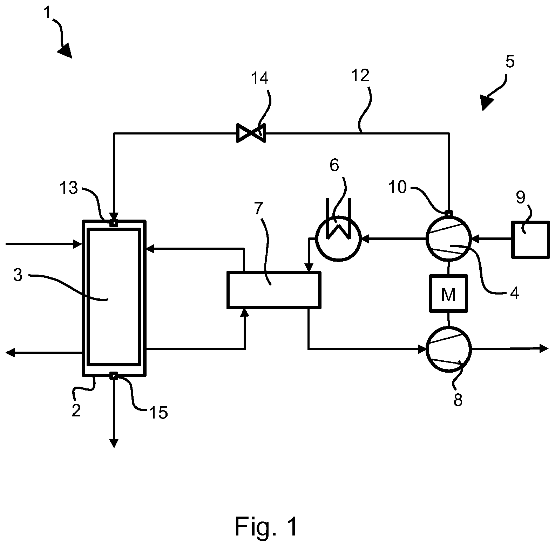

In der Figur 1 ist schematisch ein Brennstoffzellensystem 1 gezeigt, bei dem eine Mehrzahl von Membran-Elektroden-Einheiten 3 zu einem durch ein Rechteck symbolisierten Stapel zusammengefasst sind, der in einem Gehäuse 2 angeordnet ist. Dieser Stapel muss zum Betrieb mit Betriebsmedien versorgt werden, also zum einen mit dem Brennstoff, insbesondere Wasserstoff oder einem wasserstoffhaltigen Gasgemisch, und zum anderen mit einem sauerstoffhaltigen Gasgemisch, insbesondere Luft, die das Kathoden-Betriebsmedium bildet. Diese Luft wird durch einen Filter einem Verdichter 4 zugeführt, in dem diese komprimiert und daher erwärmt wird. Über einen Ladeluftkühler 6 wird die Luft einem Befeuchter 7 und aus diesem dem Stapel zugeführt.

Der der Brennstoffzelle 1 zugefügte Wasserstoff kann aus dieser in das Gehäuse 2 diffundieren, so dass die Gefahr der Anreicherung eines brennbaren Gemisches besteht. Dem wird vorgebeugt durch eine Vorrichtung zur Gehäusebelüftung, die gemäß der Erfindung durch eine dem Verdichter 4 zugeordnete Mitteldruckentnahme 10 realisiert ist.

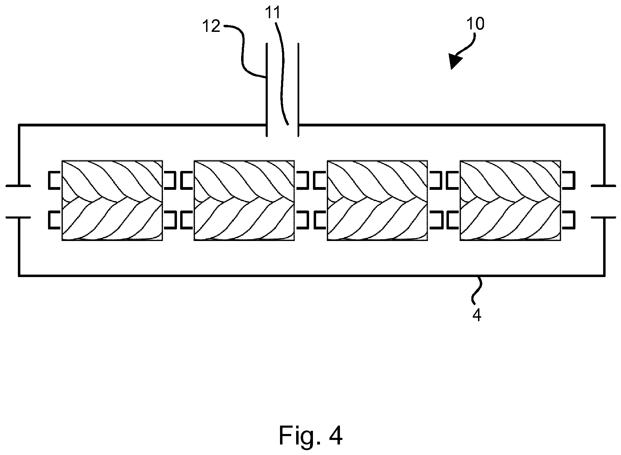

Der Verdichter 4 kann entsprechend der in Figur 4 gezeigten Gestaltung als Schraubenverdichter ausgebildet sein, bei dem entlang der Schraubenlängsrichtung der Druck kontinuierlich zunimmt. Bringt man in die Wandung des Verdichters 4 eine Bohrung als Austrittsöffnung 11 ein, so herrscht an dieser der zu der Verdichterlänge korrespondierende Druck, der gegenüber dem am Eingang des Verdichters 4 und dem am Ausgang des Verdichters 4 vorliegenden Druck als Mitteldruck bezeichnet werden kann.

Die dem Verdichter 4 zugeordnete Austrittsöffnung 11 ist über eine Druckleitung 12 mit einer Gehäuseöffnung 13 des Gehäuses 2 verbunden, wobei der Austrittsöffnung 11 und/oder der Druckleitung 12 und/oder der Gehäuseöffnung 13 ein Ventil 14 zugeordnet sein kann. Bei den in den Figuren 1 bis 3 gezeigten Ausführungsbeispielen ist das Ventil 14 in der Druckleitung 12 angeordnet, wobei das Ventil 14 als passives Ventil ausgelegt sein kann, das bei Überschreiten eines Mindestdrucks sich selbsttätig öffnet, um so sicherzustellen, dass nur dann eine Luftströmung in der Druckleitung 12 vorliegt, wenn der Massenstrom auch ausreicht, um die gewünschte Gehäusebelüftung sicherzustellen. Es besteht auch die Möglichkeit, dass der Mitteldruckentnahme 10 ein aktives Drosselorgan zugeordnet ist, das auch als Ventil ausgestaltet ist, um neben einer unteren Grenze für den Massenstrom auch eine obere Grenze setzen zu können, um so zu vermeiden, dass dem Verdichter 4 mehr Luft entnommen wird, als zum Erzielen der gewünschten Gehäusebelüftung erforderlich ist.

Bei dem in der Figur 1 gezeigten Ausführungsbeispiel weist das Gehäuse 2 eine Austrittsöffnung 15 der Gehäusebelüftung auf, die somit die Luft an die Umgebung abgibt.

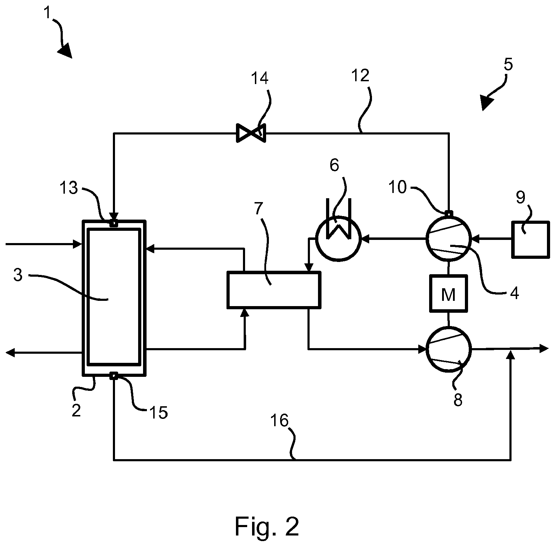

Figur 2 zeigt ein alternatives Ausführungsbeispiel, bei dem von der Austrittsöffnung 15 eine Entlüftungsleitung 16 zu einem Turbinenaustritt stromab einer Turbine 8 geführt ist, so dass die über die Mitteldruckentnahme 10 aus dem Verdichter 4 dem Gehäuse 2 zugeführte Luft nach der Nutzung im Gehäuse 2 weiterverwendet werden kann.

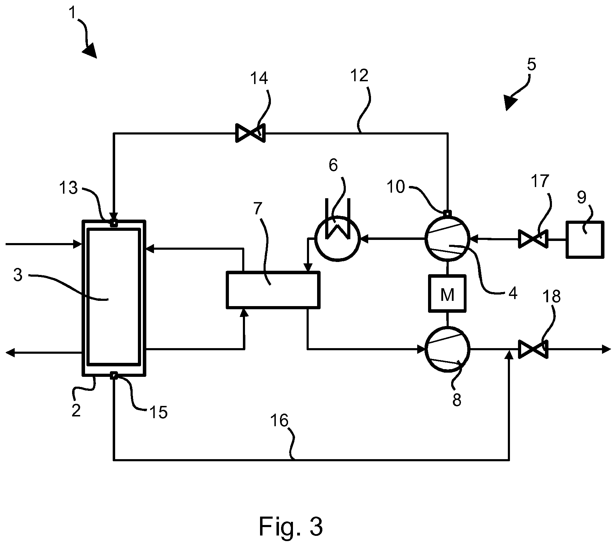

Figur 3 zeigt ein weiteres Ausführungsbeispiel, bei dem ein erstes Absperrventil 17 vor dem Verdichter 4 und ein zweites Absperrventil 18 nach dem Anschluss der Entlüftungsleitung an den Turbinenaustritt angeordnet sind. Mit dieser Ausführungsform ist in einfacher Weise die Realisierung einer Kathodenrezirkulation möglich, die dazu dient, nach dem Neustart eines abgeschalteten System das Problem des sogenannten Luft-Luft-Starts zu vermeiden, das auftritt, wenn sich anodenseitig und kathodenseitig der Membranen der Membran-Elektroden-Einheiten 3 Sauerstoff befindet. Die Kathodenrezirkulation wird bei einem Neustart des Brennstoffzellensystem initiiert durch das Schließen des ersten Absperrventils 17, das Schließen des zweiten Absperrventils 18 und dem Ansaugen von Gas aus dem Gehäuse 2 mittels des Verdichters 4 durch die Mitteldruckentnahme 10. Das durch die Mitteldruckentnahme 10 in den Verdichter 4 eintretende Gas wird bis zum Verdichteraustritt verdichtet und strömt dann durch das Gehäuse 2 zu der Turbine 8 und über die Entlüftungsleitung 16 durch das Gehäuse 2 zurück zum Verdichter 4. Die Kathoden-Rezirkulation bewirkt ein Abreagieren des restlichen vorhandenen Sauerstoffs.

### BEZUGSZEICHENLISTE:

- 1: Brennstoffzellensystem
- 2: Gehäuse
- 3: Membran-Elektroden-Einheit
- 4: Verdichter
- 5: Kathodenversorgung
- 6: Ladeluftkühler
- 7: Befeuchter
- 8: Turbine
- 9: Filter
- 10: Mitteldruckentnahme
- 11: Austrittsöffnung
- 12: Druckleitung
- 13: Gehäuseöffnung
- 14: Ventil
- 15: Austrittsöffnung
- 16: Entlüftungsleitung
- 17: erstes Absperrventils
- 18: zweites Absperrventils

## Patentansprüche

1. Brennstoffzellensystem mit mindestens einer in einem Gehäuse (2) angeordneter Membran-Elektroden-Einheit (3), mit einer einen Verdichter (4) aufweisenden Kathodenversorgung (5) und mit einer Vorrichtung zur Gehäusebelüftung, **dadurch gekennzeichnet, dass** die Vorrichtung zur Gehäusebelüftung eine dem Verdichter (4) zugeordnete Mitteldruckentnahme (10) aufweist.

2. Brennstoffzellensystem nach Anspruch 1, **dadurch gekennzeichnet, dass** der Verdichter (4) im Bereich eines im Betrieb intern vorliegenden Mitteldrucks eine Austrittöffnung (11) aufweist, die über eine Druckleitung (12) mit einer Gehäuseöffnung (13) des Gehäuses (2) verbunden ist.

3. Brennstoffzellensystem nach Anspruch 2, **dadurch gekennzeichnet, dass** der Austrittsöffnung (11) und/oder der Druckleitung (12) und/oder der Gehäuseöffnung (13) ein Ventil (14) zugeordnet ist.

4. Brennstoffzellensystem nach Anspruch 3, **dadurch gekennzeichnet, dass** das Ventil (14) als passives Ventil ausgelegt ist, das bei Überschreiten eines Mindestdrucks sich selbsttätig öffnet.

5. Brennstoffzellensystem nach einem der Ansprüche 1 bis 4, **dadurch gekennzeichnet, dass** der Mitteldruckentnahme ein aktives Drosselorgan zugeordnet ist.

6. Brennstoffzellensystem nach einem der Ansprüche 1 bis 5, **dadurch gekennzeichnet, dass** der Verdichter (4) ausgewählt ist aus einer Gruppe, die Schraubenverdichter und Rootverdichter umfasst.

7. Brennstoffzellensystem nach einem der Ansprüche 1 bis 6, **dadurch gekennzeichnet, dass** das Gehäuse (2) eine Austrittsöffnung (15) der Gehäusebelüftung aufweist.

8. Brennstoffzellensystem nach Anspruch 7, **dadurch gekennzeichnet, dass** von der Austrittsöffnung (15) eine Entlüftungsleitung (16) zu einem Turbinenaustritt stromab einer Turbine (8) geführt ist.

9. Brennstoffzellensystem nach Anspruch 8, **dadurch gekennzeichnet, dass** ein erstes Absperrventil (17) vor dem Verdichter (4) und ein zweites Absperrventil (18) nach dem Anschluss der Entlüftungsleitung (16) an den Turbinenaustritt angeordnet sind.

10. Verwendung des Brennstoffzellensystems nach Anspruch 9 zur Realisierung einer Kathodenrezirkulation, umfassend die Schritte:
Schliessen des ersten Absperrventils (17),
Schliessen des zweiten Absperrventils (18),
Ansaugen von Gas aus dem Gehäuse (2) mittels des Verdichters (4) durch die Mitteldruckentnahme (10),
Verdichten des Gases nach der Mitteldruckentnahme (10) bis zum Verdichteraustritt, und
Strömen des Gases durch das Gehäuse (2) zu der Turbine (8) und über die Entlüftungsleitung (16) durch das Gehäuse (2) zum Verdichter (4) zurück.

## Claims

1. Fuel cell system having at least one membrane electrode assembly (3) arranged in a housing (2), with a cathode supply (5) having a compressor (4) and with a device for housing ventilation, **characterised in that** the device for housing ventilation has a medium pressure draw-off (10) assigned to the compressor (4).

2. Fuel cell system according to claim 1, **characterised in that** the compressor (4) has an outlet opening (11) in the region of a medium pressure, provided internally during operation, which outlet opening is connected via a pressure line (12) to a housing opening (13) of the housing (2).

3. Fuel cell system according to claim 2, **characterised in that** a valve (14) is assigned to the outlet opening (11) and/or the pressure line (12) and/or the housing opening (13).

4. Fuel cell system according to claim 3, **characterised in that** the valve (14) is designed as a passive valve, which opens automatically when a minimum pressure is exceeded.

5. Fuel cell system according to any of claims 1 to 4, **characterised in that** an active throttling device is assigned to the medium pressure draw-off.

6. Fuel cell system according to any of claims 1 to 5, **characterised in that** the compressor (4) is selected from a group which comprises screw compressors and root compressors.

7. Fuel cell system according to any of claims 1 to 6, **characterised in that** the housing (2) has an outlet opening (15) of the housing ventilation system.

8. Fuel cell system according to claim 7, **characterised in that** from the outlet opening (15) a vent line (16) is guided to a turbine outlet downstream of a turbine (8).

9. Fuel cell system according to claim 8, **characterised in that** a first shut-off valve (17) is arranged before the compressor (4) and a second shut-off valve (18) is arranged after the connection of the vent line (16) on the turbine outlet.

10. Use of the fuel cell system according to claim 9 for implementing a cathode recirculation, comprising the steps:
closing the first shut-off valve (17),
closing the second shut-off valve (18),
suctioning gas out of the housing (2) by means of the compressor (4) through the medium pressure draw-off (10),
compressing the gas after the medium pressure draw-off (10) up to the compressor outlet, and
flowing the gas through the housing (2) to the turbine (8) and via the vent line (16) through the housing (2) back to the compressor (4).

## Revendications

1. Système de piles à combustible avec au moins une unité d'électrodes à membrane (3) disposée dans un boîtier (2), avec une alimentation de cathode (5) présentant un compresseur (4) et avec un dispositif pour la ventilation de boîtier, **caractérisé en ce que** le dispositif pour la ventilation de boîtier présente une extraction en pression intermédiaire (10) associée au compresseur (4).

2. Système de piles à combustible selon la revendication 1, **caractérisé en ce que** le compresseur (4) présente un orifice de sortie (11) dans la zone d'une pression intermédiaire interne présente en fonctionnement, qui est relié à une ouverture de boîtier (13) du boîtier (2) par l'intermédiaire d'une conduite sous pression (12).

3. Système de piles à combustible selon la revendication 2, **caractérisé en ce qu'**une soupape (14) est associée à l'orifice de sortie (11) et/ou à la conduite sous pression (12) et/ou à l'ouverture de boîtier (13).

4. Système de piles à combustible selon la revendication 3, **caractérisé en ce que** la soupape (14) est conçue comme une vanne passive, qui s'ouvre de manière automatique lors du dépassement d'une pression intermédiaire.

5. Système de piles à combustible selon l'une des revendications 1 à 4, **caractérisé en ce qu'**un organe d'étranglement actif est associé à l'extraction en pression intermédiaire.

6. Système de piles à combustible selon l'une des revendications 1 à 5, **caractérisé en ce que** le compresseur (4) est choisi dans un groupe qui comprend un compresseur à vis et un compresseur Root.

7. Système de piles à combustible selon l'une des revendications 1 à 6, **caractérisé en ce que** le boîtier (2) présente un orifice de sortie (15) de la ventilation de boîtier.

8. Système de piles à combustible selon la revendication 7, **caractérisé en ce qu'**une conduite d'évacuation d'air (16) est disposée depuis l'orifice de sortie (15) vers une sortie de turbine en aval d'une turbine (8).

9. Système de piles à combustible selon la revendication 8, **caractérisé en ce qu'**une première soupape d'arrêt (17) est disposée avant le compresseur (4) et une seconde soupape d'arrêt (18) est disposée après le raccordement de la conduite d'évacuation d'air (16) à la sortie de la turbine.

10. Utilisation du système de piles à combustible selon la revendication 9 en vue de réaliser une recirculation à la cathode, comprenant les étapes :
de fermeture de la première soupape d'arrêt (17),
de fermeture de la seconde soupape d'arrêt (18),
d'aspiration de gaz hors du boîtier (2) au moyen du compresseur (4) à travers l'extraction en pression intermédiaire (10),
de compression du gaz après l'extraction en pression intermédiaire (10) jusqu'à la sortie du compresseur, et
de circulation du gaz à travers le boîtier (2) vers la turbine (8) et, en retour, via la conduite d'évacuation d'air (16) à travers le boîtier (2) vers le compresseur (4).
